# FASCICULE DE BREVET EUROPEEN

(11) **EP 2 285 935 B1**
(45) Date de publication et mention de la délivrance du brevet: **27.03.2019**
(21) Numéro de dépôt: 09757722.5
(22) Date de dépôt: 12.05.2009
(51) Int. Cl.: C10B 53/02, C10B 49/02, C10B 31/08, F23G 7/10

(54) **PROCEDE ET DISPOSITIF DE CARBONISATION**
CARBONISIERUNGSVERFAHREN UND -VORRICHTUNG
CARBONIZATION METHOD AND DEVICE

(30) Priorité: 13.05.2008 FR 0853093
(43) Date de publication de la demande: 23.02.2011
(73) Titulaire: Carbonex Technologies, 10430 Troyes (FR)
(72) Inventeur: SOLER-MY, Pierre, F-10110 Buxueil (FR); LOISEAU, Arnaud, 10250 Mussy Sur Seine (FR)
(74) Mandataire: Rhein, Alain
(86) Numéro de dépôt international: PCT/FR2009/050867
(87) Numéro de publication internationale: WO 2009/147346

(56) Documents cités:
- WO-A-02/48292
- DE-A1- 2 844 741
- FR-A- 2 586 031
- GB-A- 1 440 236
- US-A- 2 705 697

## Description

L'invention concerne un procédé de fabrication de charbon de bois, ou/et de charbon actif, à partir d'une charge de bois.

L'invention concerne encore un module four pour la fabrication de charbon de bois ou/et de charbon actif, par la mise en oeuvre de ce procédé, conçu apte à recevoir, au niveau d'une chambre de carbonisation un panier conçu apte à recevoir une charge de bois, ladite chambre de carbonisation étant disposée entre une chambre amont et une chambre aval, ledit module four comportant ou étant raccordé à au moins un moyen de chauffage extérieur à ladite charge conçu apte à générer des premiers gaz de chauffage chauds non oxydants.

L'invention concerne encore une installation de carbonisation, en particulier pour la fabrication de charbon de bois ou/et de charbon actif, selon un tel procédé, comportant plusieurs tels modules fours.

La présente invention entre dans le domaine de la fabrication du charbon de bois à partir de matières à base de ligno-cellulosiques d'humidité quelconque.

Pour effectuer la carbonisation du bois, on élève, de façon connue, la température d'une charge de bois. A un certain stade correspondant à un certain niveau de température dans la charge, une réaction de pyrolyse est initiée. Une fois la réaction de pyrolyse terminée, le produit résultant de la réaction est du charbon de bois. Il est encore possible d'augmenter la température de la charge, de façon à obtenir un charbon de bois plus cuit. Ensuite, le moyen de chauffage est arrêté, et la charge de charbon de bois est refroidie.

On peut classer les dispositifs de carbonisation par leur moyen de chauffage:
- les fours à combustion partielle sont en général artisanaux ; une partie de la charge de bois est brûlée pour carboniser le reste de la charge.
- les fours à chauffage externe utilisent une source d'énergie additionnelle.
- les fours à contact de gaz chauds sont des compromis entre les modèles précédents, et sont utilisés notamment en fours continus industriels.

L'état de la technique est imparfait, car de nombreux problèmes ne sont pas correctement résolus. Il est difficile et coûteux d'utiliser du bois vert, ou humide. De ce fait il est souvent nécessaire de sécher, en amont de la fabrication du charbon de bois, les bois ou les chutes d'exploitation forestière ou de scierie, pendant 3 à 6 mois. Ce séchage est souvent effectué dans un séchoir ou un four séparé, qui nécessite une dépense d'énergie importante.

Les petites dimensions des fours existants rendent nécessaire la pré-découpe de la charge en menus morceaux, en particulier pour les fours continus industriels.

Pour les fours artisanaux, le dispositif de carbonisation est immobilisé pour refroidir le charbon, ce qui allonge les temps de cycle de 2 à 12 jours selon la taille du four.

La surveillance du process est faite par un opérateur, et consiste en une surveillance subjective, olfactive et visuelle des fumées. Dans certaines installations industrielles, des capteurs de température permettent le suivi du process.

Les fours actuels ne permettent pas un contrôle homogène des températures de carbonisation durant le process. En fait il existe des parties de fours beaucoup plus chaudes que voulu, et d'autres plus froides. Le charbon résultant est très peu homogène, ce qui réduit la quantité de charbon obtenu et nuit à la qualité recherchée.

De nombreux procédés obligent à manipuler le charbon durant sa carbonisation et/ou son refroidissement, augmentant le taux de fines, de petite taille, et de faible valeur.

Différents dispositifs ont tenté de remédier à ces problèmes. On connaît ainsi, par le document FR 2 604 181, un four pour la fabrication de charbon de bois en panier conteneur dans lequel circulent des gaz chauds, à une température inférieure à 400°C, à travers la charge de haut en bas.

Le document FR 2 586 031 décrit un dispositif à plusieurs enceintes, correspondant chacune à une étape du procédé de fabrication de charbon de bois : séchage, carbonisation, ventilation, et chacune équipée de deux chaudières. L'air de combustion est amené par ventilateur.

Un document EP 330 784 décrit des fours fonctionnant par paire : l'un est utilisé pour la carbonisation, et les gaz chauds produits lors de la réaction sont conduits à l'autre four qui est utilisé pour sécher les bois humides ou verts.

On connaît, dans des domaines différents de celui de la carbonisation du bois, des installations réutilisant, au moins partiellement, des gaz issus de la réaction dans l'installation. Ainsi, on connaît le document GB 1 440 236, décrivant un four de traitement de déchets par incinération fonctionnant en boucle continue : des gaz de distillation issus de la réaction dans la chambre du four sont, après une nécessaire purification, qui permet de réinjecter dans le four des goudrons et impuretés à retraiter, séparés en deux portions de gaz qui suivent des circuits séparés. La première portion subit nécessairement un traitement de lavage, puis est injectée comme combustible dans un four de réchauffage avant renvoi dans l'atmosphère. La seconde portion est réchauffée par échange dans ce four de préchauffage, sans contact avec le flux de gaz de la première portion, puis réinjectée dans le four d'incinération. Ce procédé nécessite absolument des traitements de purification ou/et de lavage des gaz pour permettre leur utilisation. L'installation est complexe, comporte des circuits de gaz séparés, et la régulation des températures de gaz est difficile. Aucune disposition ne prend en compte, pour un traitement de carbonisation, la nécessité d'injecter dans la charge un gaz exempt d'oxygène O₂ gaz. Un tel four n'est pas utilisable pour la conduite d'un processus de carbonisation.

Le document WO 02/48292 décrit un processus continu de gazéification de déchets carbonés, portés, dans une chambre, à très haute température (1300°C) en présence de vapeur d'eau et de dioxyde de carbone. Une partie des gaz de pyrolyse issus de la réaction est directement utilisée comme combustible. Excepté la possibilité d'injecter, notamment pour le démarrage, du combustible, il n'existe pas de possibilité de régulation du gaz de réutilisation. De plus, ce dernier n'est réutilisé que par sa combustion obligatoire.

De telles installations, prévues pour l'incinération de déchets, conviennent mal à la carbonisation de bois, qui est un processus délicat au cours duquel il faut gérer une combustion incomplète d'une charge de bois, en évitant tout emballement du four utilisé à cet effet, et donc contrôler en permanence la température au sein de cette charge.

Dans les fours de carbonisation existants, la durée d'occupation des fours reste longue, ce qui nécessite la mise en batterie de plusieurs fours pour effectuer les opérations de séchage, de carbonisation, et de refroidissement, de la charge.

Le document US 2 705 697 A décrit un module four pour la fabrication de charbon de bois, conçu apte à recevoir, au niveau d'une chambre de carbonisation une grille conçue apte à recevoir une charge de matière carbonée, ladite chambre de carbonisation étant disposée entre une chambre amont et une chambre aval , ledit module four comportant ou étant raccordé à au moins un moyen de chauffage, extérieur à ladite charge conçu apte à générer des gaz de chauffage chauds non oxydants.

L'invention a pour but de pallier les inconvénients de l'état de la technique en proposant un procédé de conduite particulière du procédé de carbonisation, à partir de bois vert ou humide, dans un module four conçu à cet effet, permettant d'en réduire le temps d'occupation, et d'obtenir une bonne rotation des charges, avec un bon rendement énergétique.

L'invention se propose encore de fournir les conditions de régulation d'une bonne réaction de carbonisation au sein d'une charge de bois, par la maîtrise des flux et des températures des différents gaz utilisés. L'invention utilise les gaz circulant dans le dispositif pour la conduite du processus, en effectuant un mélange approprié des différents gaz en présence à différents points de l'installation, pour amener, en amont de la charge, des gaz entrants avec les meilleurs paramètres pour initier ou/et entretenir la réaction de carbonisation avec un rendement optimal, en particulier par un contrôle optimal de la répartition de la température dans la charge de bois, et la production d'un charbon de bois d'excellente qualité.

L'invention fait en sorte d'utiliser les gaz en présence aux différents points de l'installation, tels quels, sans effectuer de traitement de purification, lavage, ou similaire, de façon à rendre le dispositif le plus simple possible. L'invention évite encore, autant que possible, la combustion des gaz réutilisés.

A cet effet, l'invention concerne un procédé de fabrication de charbon de bois ou/et de charbon actif, à partir d'une charge de bois selon la revendication 1.

L'invention concerne encore un module four pour la fabrication de charbon de bois ou/et de charbon actif, par la mise en oeuvre de ce procédé, selon la revendication 9.

L'invention concerne encore une installation de carbonisation, en particulier pour la fabrication de charbon de bois ou/et de charbon actif, selon un tel procédé, comportant plusieurs tels modules fours, ladite installation comportant au moins un foyer central générant des gaz de chauffage pour au moins deux modules fours qui lui sont raccordés.

D'autres caractéristiques et avantages de l'invention ressortiront de la description détaillée qui va suivre des modes de réalisation non limitatifs de l'invention, en référence aux figures annexées dans lesquelles :
- la figure 1 représente, de façon schématisée, partielle, et en coupe, un dispositif de mise en oeuvre de l'invention;
- la figure 2 représente, de façon analogue, le dispositif de la figure 1 pendant le début d'une première phase de démarrage du procédé selon l'invention ;
- la figure 3 représente, de façon analogue, le dispositif de la figure 1 pendant la suite de cette première phase de démarrage du procédé selon l'invention ;
- la figure 4 représente, de façon analogue, le dispositif de la figure 1 pendant une seconde phase de carbonisation du procédé selon l'invention ;
- la figure 5 représente, de façon analogue, le dispositif de la figure 1 pendant une troisième phase de refroidissement du procédé selon l'invention.

L'invention concerne plus particulièrement un procédé et un module four 100 de fabrication de charbon de bois, ou/et de charbon actif, à partir d'une charge de bois 6. Un premier mode de réalisation de l'invention est illustré sur les figures.

L'invention met en oeuvre un procédé innovant de fabrication de charbon de bois ou/et de charbon actif, à partir d'une charge de bois 6 disposée dans une chambre de carbonisation 25, et dont la particularité est l'initiation, par au moins un moyen de chauffage externe à la charge 6, ou encore extérieur à un module four 100 auquel est intégrée cette chambre de carbonisation 25, d'un front de pyrolyse 20, suivi de la propagation contrôlée de ce front de pyrolyse 20. A cet effet, le procédé comporte les étapes suivantes :
- on génère, par au moins un moyen de chauffage extérieur à la charge 6, des premiers gaz chauds dits de chauffage G1 non oxydants, c'est-à-dire ne comportant pas d'oxygène sous forme gazeuse O₂; à cet effet on utilise de préférence une chaudière réductrice, consommant en entrée des gaz pauvres en oxygène O₂ gazeux, et délivrant en sortie des gaz qui n'en contiennent pas ;
- on mélange ces premiers gaz chauds de chauffage G1 avec des seconds gaz dits de dilution G2, pour constituer un mélange de gaz entrants G0 non oxydants, ne comportant pas d'oxygène sous forme gazeuse O₂;
- on envoie ce mélange de gaz entrants G0 en amont dans la charge 6 pour y générer un front de pyrolyse 20;
- on crée une surpression entre l'amont et l'aval de la charge 6 pour forcer ledit front de pyrolyse 20 à la traverser en sens unique de l'amont vers l'aval;
- on récupère en aval de la charge 6, au niveau d'une chambre aval 19, des troisièmes gaz dits sortants G3 dans une canalisation 21, gaz G3 dont on convoie au moins une première partie sous la forme d'un flux desdits seconds gaz de dilution G2 par un moyen de convoyage 4, et dont on évacue une seconde partie constituée de gaz dits de service G4 complémentaire à la première partie constituée desdits gaz de dilution G2, sous la forme d'un flux de ces quatrièmes gaz de service G4, par un moyen de convoyage 8 vers un orifice de sortie ou d'utilisation, par exemple pour remplir des bouteilles en vue d'une réutilisation de ces gaz de service G4, ou pour alimenter une autre installation, telle qu'un séchoir ou analogue.

Dans un mode de réalisation préférentiel de l'invention, les bois, ou/et produits d'exploitation forestière ou de scierie, ou autres végétaux, qu'on appellera « bois » dans la suite de l'exposé, sont rangés pour constituer une charge 6 dans au moins un panier 7 permettant la circulation des fluides gazeux ou/et liquides au travers de la charge 6. Ils resteront dans ce panier 7 pendant toute la durée de l'opération de carbonisation et de refroidissement après carbonisation proprement dite. Ce panier 7 contenant une charge de bois 6 peut être utilisé comme une palette de préparation ainsi que de stockage, aussi bien de la matière première que du produit fini. Ce panier 7 peut être de très grande taille, par exemple de quelques mètres de longueur. Ce panier peut notamment être rempli directement en forêt. Il permet de traiter des charges hétérogènes en essences, taux d'humidité et dimensions. Ce panier peut être disposé selon diverses orientations, et pas nécessairement vertical ou horizontal, même s'il s'agit de modes de réalisations préférés de l'invention.

Le procédé selon l'invention comprend alors les étapes suivantes :
- on dispose la charge 6 dans au moins un panier 7 dans un dispositif étanche entre une première chambre amont 18 et une seconde chambre aval 19;
- on génère, par au moins un moyen de chauffage extérieur à la charge 6, des premiers gaz chauds de chauffage G1, qu'on amène dans une chambre de mélange 15;
- on amène, dans la chambre de mélange 15, des seconds gaz de dilution G2 ;
- on envoie, par des moyens de circulation 5, un mélange de gaz entrants G0 fait desdits premiers gaz de chauffage G1 et seconds gaz de dilution G2, dans la première chambre amont 18 en surpression par rapport à la seconde chambre aval 19, pour générer dans la charge 6 un front de pyrolyse 20 qu'on force, sous l'action desdits moyens de circulation 5, à la traverser en sens unique depuis la première chambre amont 18 vers la seconde chambre aval 19 ;
- on récupère dans la seconde chambre aval 19 des troisièmes gaz sortants G3;
- on récupère au moins une partie des troisièmes gaz sortants G3, sous la forme d'un flux des seconds gaz de dilution G2 qu'on convoie par des moyens de convoyage 4 vers la chambre de mélange 15.

De façon avantageuse, on convoie le flux de second gaz de dilution G2 par les moyens de convoyage 4 vers la chambre de mélange 15 de façon séparée des premiers gaz chauds de chauffage G1.

Pour réduire le temps de refroidissement de la charge après l'achèvement du cycle de carbonisation, on effectue avantageusement un refroidissement de la charge 6 après pyrolyse complète par pulvérisation d'eau dans le flux du mélange de gaz entrants G0.

Afin de tirer tous les avantages de la maîtrise du procédé de carbonisation au sein de la charge, on régule en flux et en température les gaz entrants G0 et on pilote une boucle de gaz, par le contrôle des flux des gaz de chauffage G1 et des gaz de dilution G2, ce contrôle des flux étant conçu apte à piloter la température des gaz entrants G0, et on contrôle encore le débit des gaz entrants G0 par les moyens de circulation 5.

De façon économique, le procédé selon l'invention n'effectue pas d'autre traitement sur les gaz sortants G3 qu'une éventuelle évacuation de condensats, à l'exclusion de tout traitement de lavage, de combustion, d'oxydation, de réchauffement ou refroidissement, de compression ou détente.

De façon préférée et avantageuse, on génère et on fait progresser le front de pyrolyse 20 en sens inverse de la convection naturelle qui s'établit dans la charge 6 de bois, ce qui revient à dire que l'entrée des gaz en amont dans la charge 6 est de préférence d'une altitude supérieure ou égale à la sortie des gaz en aval de cette charge.

Pour garantir l'introduction de gaz entrants G0 dépourvus d'oxygène, on génère les premiers gaz chauds de chauffage G1 non oxydants au niveau d'un foyer central réducteur dans lequel on produit une combustion incomplète de façon à ce que les premiers gaz de chauffage G1 soient exempts d'oxygène gaz O₂. Ce foyer central est de préférence conçu apte à alimenter plusieurs chambres de carbonisation, dont chacune comporte une charge 6 différente, et soumise à un processus de carbonisation indépendant de celui des autres charges 6 alimentées par des mélanges de gaz entrants faisant appel à ce même foyer central.

Dans une variante de réalisation, tel que visible sur les figures, afin d'évacuer l'air introduit avec la charge 6 lors de son chargement, on dirige la portion des gaz sortants G3, qui n'est pas utilisée pour constituer les gaz de dilution G2, vers des moyens d'évacuation et de mise à l'atmosphère 17, notamment sous forme d'une cheminée, ou/et vers des moyens de convoyage 16 où cette portion constitue des gaz de service G4 aptes à alimenter des moyens de combustion tels qu'un foyer, ou un séchoir, ou à alimenter toute autre utilisation, soit directement, soit au travers d'un conditionnement desdits gaz de service en bouteilles ou similaire.

Dans un mode particulièrement avantageux de mise en oeuvre du procédé selon l'invention, permettant d'obtenir un meilleur rendement, on effectue la pyrolyse sous pression, et à cet effet on soumet une première chambre amont 18 directement en amont de la charge 6 ainsi qu'une seconde chambre aval 19 directement en aval de la charge 6 à une pression supérieure à la pression atmosphérique. Si cette pression peut être très légèrement supérieure à la pression atmosphérique, avec une surpression dans les chambres de l'ordre de quelques milliers de Pa, on la choisit avantageusement d'une valeur comprise entre 10.10⁵ et 30.10⁵ Pa.

L'invention est particulièrement bien adaptée pour la carbonisation de l'eucalyptus, ou des coques de noix de coco, ou d'autres végétaux tropicaux similaires.

L'invention concerne encore un module four 100 selon la revendication 9 conçu pour la mise en oeuvre du procédé selon la revendication 1.

Ce module four 100 peut être mobile. Le charbon de bois obtenu in situ est environ quatre fois plus léger que le bois. Cette mobilité permet d'alléger le coût du transport

Ce module four 100 conçu pour la fabrication de charbon de bois ou/et de charbon actif, par la mise en oeuvre de ce procédé, est conçu apte à recevoir, au niveau d'une chambre de carbonisation 25, un panier 7 conçu apte à recevoir une charge de bois 6 . Cette chambre de carbonisation 25 est disposée entre une chambre amont 18 et une chambre aval 19.

Le module four 100 peut comporter au moins un moyen de chauffage extérieur à la charge 6, conçu apte à générer des premiers gaz de chauffage G1 chauds non oxydants. Ce moyen de chauffage peut également être extérieur au module four 100, auquel il est raccordé.

Selon l'invention, le module four 100 comporte, en amont de la chambre amont 18 et communiquant avec elle, une chambre de mélange 15 conçue apte à recevoir, d'une part ces premiers gaz chauds de chauffage G1, et d'autre part des seconds gaz de dilution G2 provenant de moyens de convoyage 4 communicants avec la chambre aval 19, pour constituer un mélange de gaz entrants G0.

Ce panier 7, ou encore un logement 22, que comporte le module four 100 entre la chambre amont 18 et la chambre aval 19 et qui est conçu apte à contenir le panier 7, est conçu apte à interdire tout passage des gaz entrants G0 hors de la charge 6 excepté dans la chambre amont 18. Le module four 100 comporte encore des moyens de circulation 5, conçus aptes à envoyer le mélange de gaz entrants G0 en surpression dans la chambre amont 18 par rapport à la chambre aval 19.

Le module four 100 comporte des moyens de pilotage et de régulation en flux et en température des gaz entrants G0, conçus aptes à agir, d'une part, pour piloter la température des gaz entrants G0. A cet effet ils agissent sur des moyens de distribution de flux 131, notamment d'obturation, tels que clapets ou registres, situés sur le trajet des gaz de chauffage G1, sur des moyens de distribution de flux 132 situés sur le trajet des gaz de dilution G2, sur des moyens de distribution de flux 134 sur une canalisation 16 sur le trajet d'une partie constituée de gaz utiles G4 des gaz sortants G3 issus de la charge 6, l'autre partie complémentaire des gaz sortants G3 constituant les gaz de dilution G2.

Ces moyens de pilotage et de régulation en flux et en température des gaz entrants G0 sont encore conçus aptes à agir d'autre part sur des moyens de circulation 5 conçus aptes à générer un différentiel de pression positif entre la chambre amont 18 et la chambre aval 19 pour contrôler le débit des gaz entrants G0. Ces moyens de pilotage et de régulation sont encore conçus aptes à commander la marche d'un foyer générant les gaz de chauffage G1.

De façon préférée, le module four 100 comporte une base 3 apte à recevoir au moins un tel panier 7 et un couvercle 1 conçu apte à être posé par-dessus chaque panier 7, de façon étanche sur la base 3. Ce panier 7 est conçu apte à recevoir une charge de bois 6, et est disposé entre une chambre amont 18 et une chambre aval 19.

De façon avantageuse, le module four 100 comporte une trappe 11, posée de façon étanche sur le couvercle 1, et qui est apte à s'ouvrir et se fermer pour compenser d'éventuelles explosions de gaz possibles durant la carbonisation pour le cas où surviendrait une entrée accidentelle d'oxygène.

De façon préférée, le panier 7 est ouvert ou perforé à deux de ses extrémités, pour autoriser le passage des gaz ou/et des liquides. Ces extrémités communiquent, l'une avec la chambre amont 18 et l'autre avec la chambre aval 19. Le panier 7 est alors fermé étanche aux gaz sur ses autres côtés.

Dans une variante de réalisation, quand, de façon préférée mais non obligatoire, on prévoit un mouvement relatif, notamment vertical, de coulissement du panier 7 dans un logement 22. Même si cela rend la réalisation plus délicate en raison des étanchéités à prévoir, le panier 7 peut alors être entièrement perforé, à condition que son logement 22 soit quant à lui étanche aux gaz.

Contrairement à l'art antérieur des procédés à combustion partielle où on brûle une partie de la charge 6, ce qui peut alors nécessiter un pré-séchage, pour faciliter la montée en température de la charge du four, avant la fermeture de l'oxygène, selon l'invention on fait en sorte de faire circuler, à travers la charge 6 qui est dans le panier 7, des gaz entrants G0 à une température régulée.

Les gaz de chauffage G1 non oxydants sont de préférence issus de la combustion incomplète de gaz de service G4. De façon avantageuse, ces gaz de service G4 sont récupérés en aval de la charge 6, ou de la charge 6 que comporte un autre four 100 voisin.

Selon l'invention, la chambre de mélange 15, située en amont de la chambre amont 18 et en communication avec elle, est apte à recevoir, d'une part les premiers gaz chauds de chauffage G1 issus des moyens de chauffage et d'autre part des seconds gaz de dilution G2, provenant de moyens de convoyage 4 qui sont communicants avec une canalisation 21 en aval de la chambre aval 19. Celle-ci est conçue apte à recueillir des gaz sortants G3 issus de la carbonisation de la charge 6. Les moyens de convoyage 4 transportent au moins une partie des gaz sortants G3, dite gaz de dilution G2, vers la chambre de mélange 15 de façon séparée des gaz de chauffage G1. Les gaz de chauffage G1 et de dilution G2 sont mélangés dans cette chambre de mélange 15, pour constituer un mélange de gaz entrants G0.

Une partie des gaz sortants G3 est évacuée sous forme d'un flux de gaz de service G4 par au moins une canalisation 16, notamment sous l'effet de la pression des gaz produit par la pyrolyse. La partie complémentaire issue des gaz sortants G3, dite gaz de dilution G2, circule dans des moyens de convoyage constitués de préférence par une canalisation by-pass 4. Les gaz de dilution G2 arrivent de façon séparée des premiers gaz chauds de chauffage G1, vers la chambre de mélange 15.

Les quatrièmes gaz de service G4 évacués par la canalisation 8, représentent l'excès des gaz sortants G3 dans la boucle de gaz réalisée par la mise en oeuvre de l'invention.

Le module four 100 comporte encore des moyens de circulation 5, conçus aptes à envoyer le mélange de gaz entrants G0 en surpression dans la chambre amont 18 par rapport à la chambre aval 19. Ces moyens de circulation 5, qui effectuent aussi le brassage du mélange de gaz entrants G0, et sont de préférence constitués par au moins une turbine ou un ventilateur, sont dimensionnés de façon apte à maintenir une pression suffisante pour pousser le front de pyrolyse 20, dans un sens de circulation unique, au travers de la charge 6, depuis la chambre amont 18 vers la chambre aval 19. On extrait donc l'énergie de la chambre de mélange 15 par les moyens de circulation 5, qui imposent une vitesse de circulation dans le four, au travers de la charge 6. Durant la phase de pyrolyse, dès que de la vapeur est extraite de la couche le plus en amont de la charge de bois 6, le dégagement de chaleur de la pyrolyse est directement consommé en aval de la charge 6, soit dans le bas dans le cas d'un four vertical tel que représenté sur les figures. Le dégagement de chaleur dû à la pyrolyse est assez fort pour sécher le reste du bois de la charge 6 et y amorcer la réaction, qui est auto-entretenue.

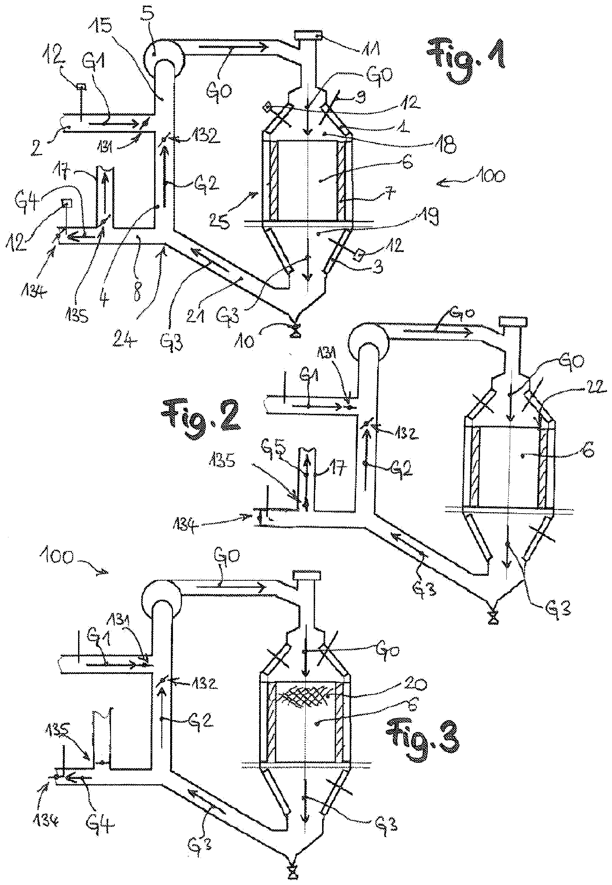

La figure 3 montre l'initiation du front de pyrolyse 20 en partie amont de la charge 6, les gaz de chauffage G1 assurent seuls la fourniture d'énergie, les gaz de dilution G2 ne sont constitués que par des gaz encore froids au niveau de la chambre aval 19. La circulation des gaz est en régime minimal, pour permettre l'évacuation de l'excédent de gaz dans le module four 100 en gaz de service G4.

Une bifurcation 24 sépare les gaz de dilution G2 dans un moyen de convoyage ou une canalisation by-pass 4 munie de moyens d'obturation ou d'une vanne papillon 132 d'une part, des gaz de service G4 dans un moyen de convoyage ou au moins une canalisation 16 munie de moyens d'obturation ou d'une vanne papillon 134 d'autre part.

Dans un mode alternatif de réalisation, le dispositif comporte, de préférence en aval de cette bifurcation 24, après une canalisation 8, un té de raccordement sur une canalisation d'extraction, notamment une cheminée 17, conçue pour évacuer l'oxygène gazeux qui est présent dans le four, notamment qui y a été introduit sous forme d'air avec la charge de bois 6 elle-même. Lors du démarrage de l'installation après le chargement d'une nouvelle charge de bois 6, on ferme les moyens d'obturation 134 de la canalisation 16, interdisant ainsi tout flux de gaz de service G4, et la canalisation d'extraction ou la cheminée 17 évacue les gaz sortants G3 qui sont froids et qui contiennent de l'oxygène gazeux. A l'apparition des premières vapeurs en sortie de cheminée 17, il suffit de fermer des moyens d'obturation 135 dont elle est équipée, et de rouvrir les moyens d'obturation 134 de la canalisation 16, de façon à libérer le passage vers l'aval des gaz de service G4.

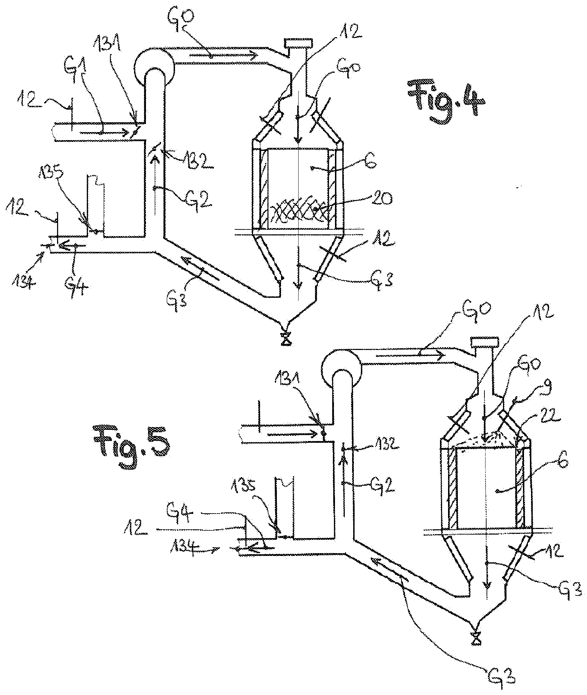

La figure 4 montre le système en marche entretenue, le front de pyrolyse 20 progresse vers l'aval de la charge 6, la pyrolyse assure l'énergie nécessaire, l'apport d'énergie par les gaz de chauffage G1 est minimal pour le seul maintien de la température, les gaz circulent à travers le by-pass.

Les moyens de circulation 5 sont de préférences implantés en partie supérieure du module four 100, pour obliger ces gaz entrants G0 à circuler du haut en bas, à travers la charge 6, en opposition à la convection naturelle.

Dans l'invention, au moins un moyen de chauffage, avantageusement extérieur au module four 100, sert à produire les gaz de chauffage G1, qui sont utilisés pour apporter l'énergie nécessaire à l'amorçage de la pyrolyse de la partie la plus en amont de la charge de bois 6. Il comporte un foyer réducteur, de façon à ne pas générer d'oxygène gazeux O₂. Ce moyen de chauffage peut utiliser notamment les quatrièmes gaz de service G4. A défaut d'installations permettant d'utiliser ces derniers, l'installation 100 comporte, ou est raccordée à, un foyer ouvert oxydant, pour leur combustion et le rejet dans l'atmosphère de gaz sans danger pour la santé humaine.

Dans une exécution préférée, la base 3 communique avec la chambre aval 19 ou incorpore cette dernière, et comporte la canalisation de sortie 8, ainsi que la canalisation by-pass 4. Cette base 3 peut être enterrée ou posée sur un sol. Elle comporte avantageusement une vanne 10 de sortie des condensats, accumulés en son point le plus bas.

Cette base 3 peut aussi constituer la chambre aval 19, ou inférieure dans le cas d'un panier 7 monté verticalement, de laquelle on convoie des gaz de dilution G2 vers la chambre de mélange 15, le reste des gaz sortants G3, constitué par les gaz de service G4, étant évacué par un autre moyen de convoyage vers un dispositif d'utilisation ou de traitement, de préférence par combustion tel qu'exposé plus haut. Le système comporte ainsi une boucle de circulation des gaz permettant un pilotage précis de la température dans la charge de bois 6.

Un avantage important de l'invention est de pallier le problème de l'art antérieur, lié à la nécessité, avant de traiter une nouvelle charge, d'arrêter le four et d'attendre le refroidissement de la charge, pendant une durée importante.

Dans un mode de réalisation préféré, le panier 7 est incorporé, au niveau de la chambre de carbonisation 25, dans un logement 22 muni d'au moins une porte de chargement. Ce logement 22 comporte, au moins à sa périphérie autour du panier 7, au moins un échangeur de chaleur 23, ce dernier étant conçu étanche pour interdire tout passage desdits gaz entrants GO de la chambre amont 18 vers la chambre aval 19 autrement qu'au travers de la charge 6.

Selon l'invention, après la pyrolyse et la carbonisation complète, au stade désiré, on pulvérise de l'eau sur la charge 6, par l'amont et de préférence par le haut. On contrôle la température dans cette zone, afin d'assurer la vaporisation de cette eau au contact de la charge 6, mais non le mouillage de cette dernière. On peut ainsi abaisser rapidement en température la chambre du four qui contient la charge 6, et réduire la quantité d'énergie dans cette chambre.

Un refroidissement efficace et rapide de la charge 6 est ainsi obtenu par pulvérisation d'eau dans le flux du mélange de gaz G0. A cet effet, le module four 100 comporte des moyens de refroidissement, comportant des moyens d'injection 9, notamment une buse d'injection ou/et de pulvérisation ou/et atomisation, situés dans la chambre de mélange 15, ou dans la chambre amont 18, ou dans les deux. Une pulvérisation directement dans la chambre 18 permet de souffler l'eau au dessus du ou des paniers 7 sans créer de choc thermique sur les moyens de circulation 5, quand ces derniers sont constitués par un ventilateur.

La figure 5 montre la pulvérisation d'eau, la circulation des gaz est maintenue à son maximum. L'entrée des gaz G1 est fermée et ne fournit plus d'énergie, on évacue en G4 les derniers gaz, on évacue ensuite en 10, notamment au niveau d'au moins une vanne, les condensats et eaux de ruissellement.

On atteint rapidement la température de vaporisation de l'eau à la partie supérieure de la charge 6, le refroidissement est considéré comme terminé quand la température à la base de cette charge est suffisamment basse, soit usuellement un peu supérieure à la température de vaporisation de l'eau, pour effectuer le défournement du panier 7. A l'ouverture du four 100, la charge peut prendre feu au contact de l'oxygène de l'air ambiant. On place alors le panier 7 sous une cloche-étouffoir, pendant un ou deux jours, afin de finaliser le refroidissement du charbon, de préférence en zone de transit avant conditionnement.

De façon préférée, des capteurs 12 de température ou/et de pression haut et bas au niveau de la charge, et des capteurs 12 de débit ou/et pression ou/et température des gaz turbinés, constituent les entrées d'un système de pilotage automatisé de conduite du process dans l'installation, sans opérateur, par exemple sous forme d'un automate programmable, ordinateur ou similaire, conçu apte à commander les moyens de circulation 5 ou/et les moyens d'injection 9 et des vannes 10. Un tel système de pilotage peut encore contrôler un ou plusieurs registres 13 de régulation, notamment 131 des premiers gaz de chauffage G1 ou/et 132 des seconds gaz de dilution G2, en pression ou/et débit, ou/et encore les moyens de régulation 134 de la canalisation 16, et 135 de la cheminée 17.

La mesure de l'écart de température entre l'amont et l'aval de la charge 6 permet le contrôle simple et précis du type de carbonisation, et donc l'obtention de charbon de bois homogène, selon son degré de cuisson, de la qualité « peu cuit » à la qualité « très cuit » selon le besoin. Ceci était impossible pour les fours artisanaux et très difficile dans la plupart des systèmes industriels de l'art antérieur.

L'énergie fournie aux moyens de chauffage, notamment chaudière ou foyer, pour produire les gaz de chauffage G1, est issue d'un combustible quelconque: bois, gaz, gaz de pyrolyse ou autre, ou mixte.

La pesée de la charge avant enfournement et après refroidissement permet le contrôle de rendement du module four.

Le temps de cycle est tributaire de l'épaisseur de la charge 6 à traverser par les gaz, et est en général plus court que les procédés de l'art antérieur, où, notamment en forêt tropicale il est connu de réaliser seulement deux cycles de 12 jours par mois dans un même four selon l'art antérieur.

Avec l'invention, il est possible de passer très rapidement au traitement de la charge suivante, avec des paramètres bien stabilisés au niveau d'une chaudière constituant les moyens de chauffage.

De façon préférée, le module four 100 est calorifugé.

Il est à noter que sur la totalité de l'énergie utilisée pour la carbonisation, les moyens de chauffage n'en apportent qu'une faible partie, et surtout au démarrage quand il s'agit d'initier le front de pyrolyse 20 tout en séchant des bois humides ou gorgés de sève. Les moyens de chauffage doivent être dimensionnés pour permettre l'initiation du front de pyrolyse 20 et pour le soutien en température, surtout pour la fin de la carbonisation plus endothermique. Les moyens de chauffage se comportent donc comme un starter d'amorçage. Et on comprend ainsi qu'un même moyen de chauffage puisse être affecté, en même temps, à plusieurs charges dont le stade d'avancement de la carbonisation est différent. Dans une exécution particulière, un même moyen de chauffage peut donc alimenter plusieurs zones de carbonisation, disposées en étoile, en ligne, ou autre, à proximité du moyen de chauffage. Cette organisation est très avantageuse dans le cas où ce moyen de chauffage peut être alimenté par les gaz de service G4 issus de plusieurs zones de carbonisation. En outre il est possible de gérer plusieurs charges 6 qui sont à des stades différents de carbonisation, et de décaler leurs cycles de carbonisation, de façon à pouvoir séquencer les opérations de chargement et de déchargement.

La conception d'installations de production constituées de modules four 100 contenant chacun une charge 6, répartis autour des moyens de chauffage, rend également l'installation plus facilement transportable, en particulier en forêt tropicale où les accès sont souvent malaisés.

L'invention concerne encore une telle installation de carbonisation, en particulier pour la fabrication de charbon de bois ou/et de charbon actif, selon le procédé d'une des revendications 1 à 8, comportant plusieurs dispositifs 100 selon l'une des revendications 9 à 14 Cette installation comporte au moins un foyer central générant des gaz de chauffage G1 pour au moins deux dispositifs 100 qui lui sont raccordés.

Le rendement net, une fois déduite l'énergie apportée au niveau du moyen de chauffage si ce dernier fonctionne au bois, entre la masse de charbon de bois et la masse de la charge de bois traitée, est particulièrement avantageux avec l'invention, puisqu'il dépasse 25%, avec un taux de carbone voisin de 82%, contre un rendement usuellement inférieur à 20% dans l'art antérieur.

En somme, les gaz de chauffage G1 sont ceux qui apportent l'énergie à la charge 6 au sein d'un module four, pour assurer la température et son maintien. Ils peuvent être issus d'un moyen de chauffage extérieur à la charge 6 mais intégrés dans le module four 100, ou encore issus d'un moyen de chauffage extérieur à ce module four 100 lui-même.

Les gaz de dilution G2 sont ceux qui permettent de constituer la boucle de gaz, et, viennent en mélange avec les gaz de chauffage G1 dans la chambre de mélange 15.

Les gaz entrants G0 issus de ce mélange et amenés à une pression adéquate par le dispositif de circulation 5 sont véritablement les gaz de pilotage de la carbonisation.

L'invention apporte de nouveaux avantages :
- limitation des points de surchauffe ;
- homogénéisation de la température de la charge apportée par les flux de gaz chauds;
- bornage des valeurs des grandeurs physiques de conduite du procédé, ainsi que des caractéristiques du produit obtenu.

En somme, selon l'invention, au lieu de brûler directement les gaz, on n'en fait circuler qu'une partie en boucle afin d'obtenir un flux de gaz contrôlé en température et en débit dans la charge, l'excellent rendement du dispositif permet de garder disponible pour un autre usage la majeure partie des gaz issus de la réaction.

L'automatisation du procédé peut être complète, en ce qui concerne la régulation de température, de vitesse de flux, de pression, de débit.

La présence des moyens de circulation 5 permet de ralentir la carbonisation, de façon à en maîtriser les paramètres. On est ainsi certain d'éviter tout emballement caractéristique des fours de l'art antérieur, en particulier en continu.

Le dispositif complet est mobile, aisément transportable.

L'invention est utilisable pour fabriquer du charbon actif, grâce à la possibilité de carbonisation à haute température, ainsi qu'à la possibilité d'injection de vapeur.

La pulvérisation présente, enfin, un autre avantage, qui résulte de la génération de vapeur qui agit comme solvant et agent de nettoyage du charbon de bois produit, ce qui permet de livrer un produit propre et apte à un meilleur allumage, exigé par certaines industries.

Les avantages qualitatifs de l'invention sont importants, car le taux de produit non carbonisé, est très faible, voire nul, car la traversée du flux de gaz homogénéise les températures au sein d'une strate donnée de la charge, contrairement au cas usuel d'un traitement statique où les températures sont très différentes et peu reproductibles.

L'invention permet de préserver les gros morceaux, et génère peu de fines, contrairement aux fours verticaux usuels où la charge descend et se casse. La réduction des manipulations de la charge est également un facteur favorable de préservation de morceaux de grosse taille.

## Revendications

1. Procédé de fabrication de charbon de bois ou/et de charbon actif, à partir d'une charge de bois (6) **caractérisé en ce que** :
- on dispose ladite charge (6) dans au moins un panier (7) dans un dispositif étanche entre une première chambre amont (18) et une seconde chambre aval (19) ;
- on génère, par au moins un moyen de chauffage extérieur à ladite charge (6), des premiers gaz chauds de chauffage (G1) non oxydants, ne comportant pas d'oxygène sous forme gazeuse O₂,
- on amène ces premiers gaz chauds de chauffage (G1) dans une chambre de mélange (15) ;
- on mélange dans cette chambre de mélange (15) lesdits premiers gaz chauds de chauffage (G1) avec des seconds gaz de dilution (G2), pour constituer un mélange de gaz entrants (G0) non oxydants, ne comportant pas d'oxygène sous forme gazeuse O₂;
- on envoie, par des moyens de circulation (5), le mélange de gaz entrants (G0) dans ladite première chambre amont (18) en surpression par rapport à ladite seconde chambre (19) en aval de ladite charge (6) pour générer dans cette dernière un front de pyrolyse (20) qu'on force, sous l'action desdits moyens de circulation (5), à la traverser en sens unique depuis ladite première chambre amont (18) vers ladite seconde chambre aval (19) ;
- on récupère dans ladite seconde chambre aval (19) en aval de ladite charge (6) des troisièmes gaz sortants (G3), dont on convoie directement dans la chambre de mélange (15) et par un moyen de convoyage (4) au moins une première partie sous la forme d'un flux desdits seconds gaz de dilution (G2) pour être mélangé auxdits premiers gaz chauds de chauffage (G1) et dont une seconde partie complémentaire à la première partie est évacuée sous la forme d'un flux de quatrièmes gaz de service (G4) par un moyen de convoyage (8) vers un orifice de sortie.

2. Procédé selon la revendication 1, **caractérisé en ce qu'**on convoie ledit flux de second gaz de dilution (G2) par lesdits moyens de convoyage (4) vers ladite chambre de mélange (15) de façon séparée desdits premiers gaz chauds de chauffage (G1).

3. Procédé selon l'une des revendications précédentes, **caractérisé en ce qu'**on effectue un refroidissement de ladite charge (6) après pyrolyse complète par pulvérisation d'eau dans le flux dudit mélange de gaz entrants (G0).

4. Procédé selon l'une des revendications précédentes, **caractérisé en ce qu'**on régule en flux et en température lesdits gaz entrants (G0) et qu'on pilote une boucle de gaz, par le contrôle des flux desdits gaz de chauffage (G1) et desdits gaz de dilution (G2), ledit contrôle des flux étant conçu apte à piloter la température desdits gaz entrants (G0), et qu'on contrôle le débit desdits gaz entrants (G0) par des moyens de circulation (5).

5. Procédé selon l'une des revendications précédentes, **caractérisé en ce qu'**on fait progresser ledit front de pyrolyse (20) dans ladite charge (6) à l'encontre de la convection naturelle dans cette dernière.

6. Procédé selon l'une des revendications précédentes, **caractérisé en ce qu'**on génère lesdits premiers gaz chauds de chauffage (G1) non oxydants au niveau d'un foyer central dans lequel on produit une combustion incomplète de façon à ce que lesdits premiers gaz de chauffage (G1) soient exempts d'oxygène gaz O₂, ledit foyer central étant conçu apte à alimenter plusieurs chambres de carbonisation dont chacune comporte une charge (6) différente et soumise à un processus de carbonisation indépendant de celui desdites autres charges (6).

7. Procédé selon l'une des revendications précédentes, **caractérisé en ce qu'**on dirige la portion desdits gaz sortants (G3), qui n'est pas utilisée pour constituer lesdits gaz de dilution (G2), vers des moyens d'évacuation et de mise à l'atmosphère (17) notamment sous forme d'une cheminée, ou/et vers des moyens de convoyage où ladite portion constitue des gaz de service (G4) aptes à alimenter des moyens de combustion tels qu'un foyer, ou un séchoir, ou à alimenter toute autre utilisation, soit directement, soit au travers d'un conditionnement desdits gaz de service en bouteilles ou similaire.

8. Procédé selon l'une des revendications précédentes, **caractérisé en ce qu'**on soumet une première chambre amont (18) directement en amont de ladite charge (6) ainsi qu'une seconde chambre aval (19) directement en aval de ladite charge (6) à une pression supérieure à la pression atmosphérique d'une valeur comprise entre 10.10⁵ et 30.10⁵ Pa.

9. Module four (100) pour la fabrication de charbon de bois ou/et de charbon actif, par la mise en oeuvre du procédé selon l'une des revendications précédentes, conçu apte à recevoir, au niveau d'une chambre de carbonisation (25) un panier (7) conçu apte à recevoir une charge de bois (6), ladite chambre de carbonisation (25) étant disposée entre une chambre amont (18) et une chambre aval (19), ledit module four (100) comportant ou étant raccordé à au moins un moyen de chauffage extérieur à ladite charge (6) conçu apte à générer des premiers gaz de chauffage (G1) chauds non oxydants, ledit module four comportant en outre, en amont de ladite chambre amont (18) et communiquant avec elle une chambre de mélange (15) conçue apte à recevoir, d'une part lesdits premiers gaz de chauffage (G1), et d'autre part des seconds gaz de dilution (G2), **caractérisé par le fait qu'**il comporte :
- des moyens de convoyage (4) communicants avec ladite chambre aval (19) et avec ladite chambre de mélange (15) et conçus aptes à diriger lesdits seconds gaz de dilution (G2) en provenance de la chambre aval (19) vers la chambre de mélange (15), pour constituer avec lesdits premiers gaz de chauffage (G1) un mélange de gaz entrants (GO),
- des moyens de circulation (5), conçus aptes à envoyer ledit mélange de gaz entrants (G0) en surpression dans ladite chambre amont (18) par rapport à ladite chambre aval (19),
- un moyen de convoyage (8) conçu apte à évacuer vers un orifice de sortie un flux de quatrième gaz de service (G4) en provenance de la chambre aval (19).

10. Module four (100) selon la revendication 9, **caractérisé par le fait que** ledit panier (7), ou un logement (22) conçu apte à recevoir ledit panier (7), est conçu apte à interdire tout passage desdits gaz entrants (G0) hors de ladite charge (6) excepté dans ladite chambre amont (18).

11. Module four (100) selon l'une des revendications 9 ou 10, **caractérisé par le fait qu'**il comporte des moyens de pilotage et de régulation en flux et en température desdits gaz entrants (G0) conçus aptes à agir, d'une part, pour piloter la température desdits gaz entrants (G0), sur des moyens de distribution de flux de gaz (131) situés sur le trajet desdits gaz de chauffage (G1), sur des moyens de distribution de flux de gaz (132) situés sur le trajet desdits gaz de dilution (G2), sur des moyens de distribution de flux de gaz (16) situés sur le trajet d'une partie constituée de gaz utiles (G4) des gaz sortants (G3) issus de ladite charge (6), l'autre partie complémentaire desdits gaz sortants (G3) constituant lesdits gaz de dilution (G2), et d'autre part sur des moyens de circulation (5) conçus aptes à générer un différentiel de pression positif entre ladite chambre amont (18) et ladite chambre aval (19) pour contrôler le débit desdits gaz entrants (G0), lesdits moyens de pilotage et de régulation étant encore conçus aptes à commander la marche d'un foyer générant lesdits gaz de chauffage (G1).

12. Module four (100) selon l'une des revendications 9 à 11, **caractérisé par le fait qu'**il comporte une base (3) apte à recevoir au moins un dit panier (7) et un couvercle (1) conçu apte à être posé par-dessus chaque dit panier (7) de façon étanche sur ladite base (3), et **par le fait que** ledit panier (7), ou un logement conçu apte à recevoir ledit panier (7), est conçu apte à interdire tout passage de gaz hors de ladite charge (6) excepté dans ladite chambre amont (18) et dans ladite chambre aval (19), et **par le fait que** ledit module four (100) comporte encore des moyens de circulation (5), conçus aptes à envoyer ledit mélange de gaz entrants (G0) en surpression dans ladite chambre amont (18) par rapport à ladite chambre aval (19), et qu'il comporte des moyens de convoyage (4) depuis ladite chambre aval (19) qui est conçue apte à recueillir des gaz sortants (G3) issus de ladite charge (6), pour transporter au moins une partie desdits gaz sortants (G3) dite gaz de dilution (G2) vers ladite chambre de mélange (15) de façon séparée desdits premiers gaz chauds de chauffage (G1).

13. Module four (100) selon la revendication 12, **caractérisé en ce que** ladite base (3) communique avec ladite chambre aval (19) ou incorpore cette dernière, et comporte au moins une canalisation (8) pour l'évacuation de gaz de service (G4) issus de troisièmes gaz sortants (G3) reçus dans ladite chambre aval (19) en sortie de ladite charge (6), et un by-pass (4) pour le convoyage de la partie complémentaire auxdits gaz de service (G4) parmi lesdits troisièmes gaz (G3), dite second gaz de dilution (G2).

14. Module four (100) selon l'une des revendications 9 à 13, **caractérisé en ce qu'**il comporte des moyens de pilotage de la carbonisation et du refroidissement, comportant des capteurs de température ou/et de pression (12) conçus aptes à commander lesdits moyens de circulation (5) et un registre (13) de régulation desdits premiers gaz (G1) ou/et desdits seconds gaz (G2), ou/et des moyens d'injection (9) d'eau disposés dans ladite chambre amont (18).

15. Installation de carbonisation en particulier pour la fabrication de charbon de bois ou/et de charbon actif selon le procédé d'une des revendications 1 à 8, comportant plusieurs modules fours (100) chacun selon l'une des revendications 9 à 14, **caractérisée en ce qu'**elle comporte au moins un foyer central générant lesdits gaz de chauffage (G1) pour au moins deux desdits modules fours (100) qui lui sont raccordés.

## Patentansprüche

1. Verfahren zur Herstellung von Holzkohle oder/und von Aktivkohle aus einer Holzcharge (6), **dadurch gekennzeichnet, dass**:
- die Charge (6) in mindestens einem Korb (7) in einer dichten Vorrichtung zwischen einer ersten oberstromigen Kammer (18) und einer zweiten unterstromigen Kammer (19) angeordnet wird;
- durch mindestens ein Heizmittel außerhalb der Charge (6) erste nicht oxidierende warme Heizgase (G1) erzeugt werden, die keinen Sauerstoff in gasförmiger Form O₂ aufweisen,
- diese ersten warmen Heizgase (G1) in eine Mischkammer (15) geleitet werden,
- in dieser Mischkammer (15) die ersten warmen Heizgase (G1) mit zweiten Verdünnungsgasen (G2) gemischt werden, um ein Gemisch aus nicht oxidierenden eintretenden Gasen (G0) zu bilden, die keinen Sauerstoff in gasförmiger Form O₂ aufweisen,
- das Gemisch eintretender Gase (G0) durch Zirkulationsmittel (5) in die erste oberstromige Kammer (18) in Überdruck in Bezug auf die zweite Kammer (19) unterstromig von der Charge (6) geleitet wird, um in dieser eine Pyrolysefront (20) zu erzeugen, die unter der Wirkung der Zirkulationsmittel (5) gezwungen wird, sie in einer einzigen Richtung ab der ersten oberstromigen Kammer (18) zu der zweiten unterstromigen Kammer (19) zu durchqueren,
- in der zweiten unterstromigen Kammer (19) unterstromig von der Charge (6) dritte austretende Gase (G3) zurückgewonnen werden, von denen direkt in die Mischkammer (15) und durch ein Fördermittel (4) mindestens ein erster Teil in Form eines Stroms der zweiten Verdünnungsgase (G2) gefördert wird, um mit den ersten warmen Heizgasen (G1) gemischt zu werden und von denen ein zweiter Teil, der zu dem ersten Teil komplementär ist, in Form eines Stroms vierter Servicegase (G4) durch ein Fördermittel (8) zu einer Ausgangsöffnung abgeleitet wird.

2. Verfahren nach Anspruch 1, **dadurch gekennzeichnet, dass** der Strom zweiter Verdünnungsgase (G2) von den Fördermitteln (4) zu der Mischkammer (15) getrennt von den ersten warmen Heizgasen (G1) gefördert wird.

3. Verfahren nach einem der vorangehenden Ansprüche, **dadurch gekennzeichnet, dass** ein Abkühlen der Charge (6) nach vollständiger Pyrolyse durch Sprühen von Wasser in den Strom des Gemischs eintretender Gase (G0) durchgeführt wird.

4. Verfahren nach einem der vorangehenden Ansprüche, **dadurch gekennzeichnet, dass** die eintretenden Gase (G0) strom- und temperaturmäßig geregelt werden und durch die Kontrolle der Ströme der Heizgase (G1) und der Verdünnungsgase (G2) eine Gasschleife gelenkt wird, wobei die Kontrolle der Ströme derart konzipiert ist, dass sie imstande ist, die Temperatur der eintretenden Gase (G0) zu steuern, und dass die Menge der eintretenden Gase (G0) durch Zirkulationsmittel (5) kontrolliert wird.

5. Verfahren nach einem der vorangehenden Ansprüche, **dadurch gekennzeichnet, dass** die Pyrolysefront (20) in der Charge (6) in dieser entgegen der natürlichen Konvektion vorangetrieben wird.

6. Verfahren nach einem der vorangehenden Ansprüche, **dadurch gekennzeichnet, dass** die nicht oxidierenden ersten warmen Heizgase (G1) im Bereich eines zentralen Brennraums erzeugt werden, in welchem eine unvollständige Verbrennung derart erfolgt, dass die ersten Heizgase (G1) von Sauerstoffgas O₂ ausgenommen sind, wobei der zentrale Brennraum derart konzipiert ist, dass er imstande ist, mehrere Carbonisierungskammern zu versorgen, von denen jede eine unterschiedliche Charge (6) aufweist und einem Carbonisierungsprozess unterworfen ist, der von dem der anderen Chargen (6) unabhängig ist.

7. Verfahren nach einem der vorangehenden Ansprüche, **dadurch gekennzeichnet, dass** der Anteil der austretenden Gase (G3), der nicht verwendet wird, um die Verdünnungsgase (G2) zu bilden, zu Ableitungs- und Atmosphäreneinleitmitteln (17) insbesondere in Form eines Schornsteins oder/und zu Fördermitteln geleitet wird, wo der Anteil Servicegase (G4) bildet, die imstande sind, Verbrennungsmittel wie einen Brennraum oder einen Trockner zu versorgen oder jede andere Verwendung entweder direkt oder über eine Verpackung der Servicegase in Flaschen oder ähnliches zu versorgen.

8. Verfahren nach einem der vorangehenden Ansprüche, **dadurch gekennzeichnet, dass** eine erste oberstromige Kammer (18) direkt oberstromig von der Charge (6) sowie eine zweite unterstromige Kammer (19) direkt unterstromig von der Charge (6) einem Druck über dem atmosphärischen Druck in einem Wert zwischen 10.10⁵ und 30.10⁵ Pa unterworfen wird.

9. Ofenmodul (100) für die Herstellung von Holzkohle oder/und Aktivkohle durch die Umsetzung des Verfahrens nach einem der vorangehenden Ansprüche, das konzipiert ist, um imstande zu sein, im Bereich einer Carbonisierungskammer (25) einen Korb (7) aufzunehmen, der konzipiert ist, um imstande zu sein, eine Holzcharge (6) aufzunehmen, wobei die Carbonisierungskammer (25) zwischen einer oberstromigen Kammer (18) und einer unterstromigen Kammer (19) angeordnet ist, wobei das Ofenmodul (100) mindestens ein Heizmittel außerhalb der Charge (6) aufweist oder daran angeschlossen ist, das konzipiert ist, um imstande zu sein, nicht oxidierende warme erste Heizgase (G1) zu erzeugen, wobei das Ofenmodul ferner oberstromig von der oberstromigen Kammer (18) und kommunizierend mit ihr eine Mischkammer (15) umfasst, die konzipiert ist, um imstande zu sein, zum einen die ersten Heizgase (G1) und zum anderen zweite Verdünnungsgase (G2) aufzunehmen, **dadurch gekennzeichnet, dass** es aufweist:
- mit der unterstromigen Kammer (19) und mit der Mischkammer (15) kommunizierende Fördermittel (4), die konzipiert sind, um imstande zu sein, die zweiten Verdünnungsgase (G2) von der unterstromigen Kammer (19) zu der Mischkammer (15) zu lenken, um mit den ersten Heizgasen (G1) ein Gemisch eintretender Gase (G0) zu bilden,
- Zirkulationsmittel (5), die konzipiert sind, um imstande zu sein, das Gemisch eintretender Gase (GO) in Überdruck in die oberstromige Kammer (18) in Bezug auf die unterstromige Kammer (19) zu leiten,
- ein Fördermittel (8), das konzipiert ist, um imstande zu sein, einen Strom eines vierten Servicegases (G4) aus der unterstromigen Kammer (19) zu einer Ausgangsöffnung abzuleiten.

10. Ofenmodul (100) nach Anspruch 9, **dadurch gekennzeichnet, dass** der Korb (7) oder eine Aufnahme (22), die konzipiert ist, um zur Aufnahme des Korbes (7) imstande zu sein, konzipiert ist, um imstande zu sein, jeden Durchgang der eintretenden Gase (G0) aus der Charge (6) zu verhindern, mit Ausnahme in die oberstromige Kammer (18).

11. Ofenmodul (100) nach einem der Ansprüche 9 oder 10, **dadurch gekennzeichnet, dass** es Strom- und Temperatursteuerungs- und -regelmittel der eintretenden Gase (G0) aufweist, die konzipiert sind, um imstande zu sein, zum einen zu wirken, um die Temperatur der eintretenden Gase (G0) über Gasstromverteilungsmittel (131), die sich auf dem Weg der Heizgase (G1) befinden, über Gasstromverteilungsmittel (132), die sich auf dem Weg der Verdünnungsgase (G2) befinden, über Gasstromverteilungsmittel (16), die sich auf dem Weg eines Teils befinden, der von Nutzgasen (G4) der austretenden Gase (G3) aus der Charge (6) befinden, wobei der andere komplementäre Teil der austretende Gase (G3) die Verdünnungsgase (G2) bildet, zu steuern, und zum anderen über Zirkulationsmittel (5), die konzipiert sind, um imstande zu sein, ein positives Druckdifferential zwischen der oberstromigen Kammer (18) und der unterstromigen Kammer (19) zu erzeugen, um die Menge der eintretenden Gasen (G0) zu kontrollieren, wobei die Steuerungs- und Regelmittel ebenfalls konzipiert sind, um imstande zu sein, den Betrieb eines Brennraums zu steuern, welcher die Heizgase (G1) erzeugt.

12. Ofenmodul (100) nach einem der Ansprüche 9 bis 11, **dadurch gekennzeichnet, dass** es eine Basis (3) aufweist, die imstande ist, mindestens einen Korb (7) und einen Deckel (1) aufzunehmen, der konzipiert ist, um imstande zu sein, über jedem Korb (7) dicht auf der Basis (3) gestellt zu sein, und dadurch, dass der Korb (7) oder eine Aufnahme, die konzipiert ist, um zur Aufnahme des Korbes (7) imstande zu sein, konzipiert ist, um imstande zu sein, jeden Durchgang von Gas aus der Charge (6), mit Ausnahme in die oberstromige Kammer (18) und in die unterstromige Kammer (19), zu verhindern und dadurch, dass das Ofenmodul (100) ebenfalls Zirkulationsmittel (5) aufweist, die konzipiert sind, um imstande zu sein, das Gemisch eintretender Gase (G0) in Überdruck in die oberstromige Kammer (18) in Bezug auf die unterstromige Kammer (19) zu leiten, und dass es Fördermitteln (4) aus der unterstromigen Kammer (19) aufweist, die konzipiert sind, um imstande zu sein, austretende Gase (G3) aus der Charge (6) aufzunehmen, um mindestens einen Teil der austretenden Gase (G3), bezeichnet als Verdünnungsgase (G2), zu der Mischkammer (15) getrennt von den ersten warmen Heizgase (G1) zu transportieren.

13. Ofenmodul (100) nach Anspruch 12, **dadurch gekennzeichnet, dass** die Basis (3) mit der unterstromigen Kammer (19) kommuniziert oder diese inkorporiert und mindestens eine Kanalisation (8) für die Ableitung von Servicegasen (G4) aus dritten austretenden Gasen (G3), die in der unterstromigen Kammer (19) ausgehend aus der Charge (6) aufgenommen werden, und einen Bypass (4) für die Förderung des komplementären Teils der Servicegase (G4) unter den dritten Gasen (G3), bezeichnet als zweites Verdünnungsgas (G2), aufweist.

14. Ofenmodul (100) nach einem der Ansprüche 9 bis 13, **dadurch gekennzeichnet, dass** es Steuermittel der Carbonisierung und Abkühlung aufweist, aufweisend Temperatur- oder/und Drucksensoren (12), die konzipiert sind, um imstande zu sein, die Zirkulationsmittel (5) und ein Regelungsregister (13) der ersten Gase (G1) oder/und der zweiten Gase (G2) oder/und der Wassereinleitungsmittel (9), die in der oberstromigen Kammer (18) angeordnet sind, zu steuern.

15. Carbonisierungsanlage, insbesondere für die Herstellung von Holzkohle oder/und von Aktivkohle gemäß dem Verfahren nach einem der Ansprüche 1 bis 8, aufweisend mehrere Ofenmodule (100) jeweils nach einem der Ansprüche 9 bis 14, **dadurch gekennzeichnet, dass** sie mindestens einen zentralen Brennraum aufweist, der die Heizgase (G1) für mindestens zwei der Ofenmodule (100) erzeugt, die an ihn angeschlossen sind.

## Claims

1. A method for manufacturing charcoal and/or activated charcoal, from a load of wood (6), **characterized in that**:
- said load (6) is arranged in at least one basket (7) in a sealed device between a first upstream chamber (18) and a second downstream chamber (19);
- first non-oxidizing hot heating gases (G1), not including oxygen in gaseous form O₂, is generated, by at least one heating means outside said load (6),
- said first hot heating gases (G1) are brought into a mixing chamber (15);
- in said mixing chamber (15), said first hot heating gases (G1) are mixed with second dilution gases (G2), to form a mixture of nonoxidizing entering gases (G0), not including oxygen in gaseous form O₂;
- circulation means (5) are used to send the mixture of entering gases (G0) into said first upstream chamber (18) in overpressure relative to said second chamber (19) downstream from said load (6) to generate, in the latter, a pyrolysis front (20) that is forced, under the action of said circulation means (5), to pass through it in a single direction from said first upstream chamber (18) toward said second downstream chamber (19);
- third exiting gases (G3) are recovered in said second downstream chamber (19) downstream from said load (6), at least a first part of which is conveyed directly into the mixing chamber (15) and by a conveying means (4) in the form of a stream of said second dilution gases (G2) to be mixed with said first hot heating gases (G1) and a second part of which complementary to the first part is discharged in the form of a stream of fourth service gases (G4) by a conveying method (8) toward an outlet orifice.

2. The method according to claim 1, **characterized in that** said stream of second dilution gases (G2) is conveyed by said conveying means (4) toward said mixing chamber (15) separately from said first hot heating gases (G1).

3. The method according to one of the preceding claims, **characterized in that** a cooling is done of said load (6) after complete pyrolysis by spraying water into the stream of said mixture of entering gases (G0).

4. The method according to one of the preceding claims, **characterized in that** said entering gases (G0) are regulated in stream and temperature and a gas loop is steered, by controlling the stream of said heating gases (G1) and said dilution gases (G2), said control of the streams being designed able to steer the temperature of said entering gases (G0), and the flow rate of said entering gases (G0) is controlled by circulation means (5).

5. The method according to one of the preceding claims, **characterized in that** said pyrolysis front (20) is advanced in said load (6) against the natural convection in the latter.

6. The method according to one of the preceding claims, **characterized in that** said first nonoxidizing hot heating gases (G1) are generated at a central focus in which an incomplete combustion occurs such that said first heating gases (G1) are free of gaseous oxygen O₂, said central focus being designed able to supply several carbonization chambers, each of which includes a different load (6) and subject to a carbonization process independent of that of said other loads (6).

7. The method according to one of the preceding claims, **characterized in that** the portion of said exiting gases (G3) that is not used to make up said dilution gases (G2) is steered toward means for discharge and placement in the atmosphere (17), in particular in the form of a chimney, and/or toward conveying means where said portion makes up service gases (G4) able to supply combustion means such as a hearth, or a kiln, or to supply any other use, either directly, or through packaging of said service gases in canisters or the like.

8. The method according to one of the preceding claims, **characterized in that** a first upstream chamber (18) directly upstream from said load (6) as well as a second downstream chamber (19) directly downstream from said load (6) are subjected to a pressure greater than the atmospheric pressure by a value comprised between 10.10⁵ and 30.10⁵ Pₐ.

9. A furnace module (100) for manufacturing charcoal and/or activated charcoal, by carrying out the method according to one of the preceding claims, designed able to receive, at a carbonization chamber (25), a basket (7) designed able to receive a load of wood (6), said carbonization chamber (25) being arranged between an upstream chamber (18) and a downstream chamber (19), said furnace module (100) including or being connected to at least one heating means outside said load (6) designed able to generate first nonoxidizing hot heating gases (G1), said furnace module further including, upstream from said upstream chamber (18) communicating with it, a mixing chamber (15) designed able to receive, on the one hand, said first heating gases (G1), and on the other hand, second dilution gases (G2), **characterized in that** it includes:
- conveying means (4) communicating with said downstream chamber (19) and with said mixing chamber (15) and designed able to steer said second dilution gases (G2) coming from the downstream chamber (19) toward the mixing chamber (15), to form, with said first heating gases (G1), a mixture of entering gases (G0),
- circulation means (5), designed able to send said mixture of entering gases (G0), in overpressure, into said upstream chamber (18) relative to said downstream chamber (19),
- a conveying means (8) designed able to discharge, toward an outlet orifice, a stream of fourth service gases (G4) coming from the downstream chamber (19).

10. The furnace module (100) according to claim 9, **characterized in that** said basket (7), or a housing (22) designed able to receive said basket (7), is designed able to prohibit any passage of said entering gases (G0) outside said load (6) except in said upstream chamber (18).

11. The furnace module (100) according to one of claims 9 or 10, **characterized in that** it includes means for steering and regulating the stream and temperature of said entering gases (G0) designed to act, on the one hand, to steer the temperature of said entering gases (G0), on gas stream distributing means (131) located on the path of said heating gases (G1), on gas stream distributing means (132) located on the path of said dilution gases (G2), on gas stream distributing means (16) located on the path of a part made up of useful gases (G4) of the exiting gases (G3) derived from said load (6), the other complementary part of said exiting gases (G3) making up said dilution gases (G2), and on the other hand on circulation means (5) designed able to generate a positive pressure differential between said upstream chamber (18) and said downstream chamber (19) to control the flow rate of said entering gases (G0), said steering and regulating means further being designed able to control the operation of a furnace generating said heating gases (G1).

12. The furnace module (100) according to one of claims 9 to 11, **characterized in that** it includes a base (3) able to receive at least one said basket (7) and a lid (1) designed able to be placed on top of each said basket (7) sealably on said base (3), and **in that** said basket (7), or a housing designed able to receive said basket (7), is designed able to prohibit any passage of gas outside said load (6) except in said upstream chamber (18) and in said downstream chamber (19), and **in that** said furnace module (100) further includes circulation means (5), designed able to send said mixture of entering gases (G0), in overpressure, into said upstream chamber (18) relative to said downstream chamber (19), and that it includes conveying means (4) from said downstream chamber (19) that is designed able to collect exiting gases (G3) coming from said load (6), to transport at least part of said exiting gases (G3), called dilution gases (G2), toward said mixing chamber (15) separately from said first hot heating gases (G1).

13. The furnace module (100) according to claim 12, **characterized in that** said base (3) communicates with said downstream chamber (19) or incorporates the latter, and includes at least one channel (8) for discharging service gases (G4) coming from third exiting gases (G3) received in said downstream chamber (19) at the outlet of said load (6), and a bypass (4) for conveying from the complementary part to said service gases (G4) from among said third gases (G3), called second dilution gas (G2).

14. The furnace module (100) according to one of claims 9 to 13, **characterized in that** it includes means for steering the carbonization and cooling, including temperature and/or pressure sensors (12) designed able to control said circulation means (5) and a register (13) for regulating said first gases (G1) and/or said second gases (G2), and/or means for injecting (9) water arranged in said upstream chamber (18).

15. A carbonization installation, in particular for manufacturing charcoal and/or activated charcoal according to the method of one of claims 1 to 8, including several furnace modules (100) each according to one of claims 9 to 14, **characterized in that** it includes at least one central furnace generating said heating gases (G1) for at least two of said furnace modules (100) that are connected to it.
